# FASCICULE DE BREVET EUROPEEN

(11) **EP 2 878 531 B1**
(45) Date de publication et mention de la délivrance du brevet: **08.06.2016**
(21) Numéro de dépôt: 14003657.5
(22) Date de dépôt: 29.10.2014
(51) Int. Cl.: B64C 7/00, B64C 27/04

(54) **Carénage de sommet d'un giravion comportant un profil en goutte d'eau tronqué doté d'un bossage à surface perturbée**
Obere Verkleidung eines Drehflügelflugzeugs mit ein gekapptes Wassertropfenprofil welches mit einer Erhebung mit unregelmäßiger Oberfläche versehen ist
Top fairing of a rotorcraft comprising a truncated teardrop profile having a boss with disrupted surface

(30) Priorité: 27.11.2013 FR 1302743
(43) Date de publication de la demande: 03.06.2015
(73) Titulaire: Airbus Helicopters, 13725 Marignane Cedex (FR)
(72) Inventeur: Alfano, David, F-13090 Aix-en-Provence (FR)
(74) Mandataire: Pouillot, Laurent Pierre Paul

(56) Documents cités:
- DE-B- 1 114 394
- US-A- 3 331 444
- US-A1- 2006 269 411
- US-A1- 2011 036 954
- US-A1- 2012 104 157

## Description

La présente invention est du domaine des moyens permettant d'influencer l'écoulement d'air sur les surfaces extérieures des giravions. La présente invention relève plus particulièrement d'un carénage classiquement ménagé au sommet d'un giravion en étant disposé sous la voilure tournante d'un rotor principal à axe sensiblement vertical et en rehausse d'un capot enveloppant un groupe de motorisation du giravion.

Un giravion est un aéronef à voilure(s) tournante(s) comportant un ou plusieurs rotors, dont au moins un rotor principal à axe sensiblement vertical disposé au sommet du giravion. Le rotor principal procure au moins la sustentation du giravion, voire aussi dans le cas spécifique d'un hélicoptère sa propulsion et/ou son guidage suivant de quelconques axes de progression.

Un giravion est aussi potentiellement équipé d'au moins un rotor annexe à axe sensiblement horizontal. Classiquement, un tel rotor annexe peut être installé à l'extrémité d'une poutre de queue pour contrôler l'attitude du giravion en lacet. Un tel rotor annexe peut aussi être exploité pour former une hélice propulsive du giravion en translation.

Le ou les rotors équipant un giravion sont classiquement entraînés en rotation par un groupe de motorisation comprenant au moins un moteur à combustion, turbomoteur notamment. Le groupe de motorisation est typiquement implanté en partie haute du giravion en contrebas de la voilure du rotor principal. Un capot est ménagé autour du groupe de motorisation pour orienter l'écoulement d'air vers l'arrière du giravion et favoriser les caractéristiques aérodynamiques du giravion.

Un tel capot est couramment rehaussé par un carénage enveloppant un mécanisme de manoeuvre des pales de la voilure du rotor principal selon des commandes de vol générées par un pilote du giravion.

A titre d'exemple, un tel mécanisme de manoeuvre des pales de la voilure du rotor principal est couramment formé d'un couple de plateaux montés mobiles sur un mât porteur de la voilure. Les plateaux sont manoeuvrables par un pilote du giravion selon diverses lignes de commande pour faire varier collectivement et/ou cycliquement le pas des pales de la voilure du rotor principal afin de modifier l'attitude du giravion.

Le capot et le carénage qui le rehausse s'étendent principalement suivant une dimension longitudinale s'étendant suivant l'orientation longitudinale d'extension du giravion classiquement considérée entre l'avant et l'arrière du giravion au sol.

Bien évidemment, les notions de « sommet », de « partie haute », de « contrebas », de « bas » ou de « rehausse » par exemple, sont communément comprises au regard de l'orientation verticale du giravion au sol. De même les notions de « plan vertical » et de « plan horizontal » du giravion sont communément admises au regard des orientations générales respectivement verticale et horizontale définissant l'extension du giravion considéré au sol.

Dans ce contexte, il est opportun d'agencer le carénage pour permettre au mieux de réduire sa trainée aérodynamique et de limiter le sillage qu'il génère. L'agencement du carénage doit notamment favoriser l'adhérence du flux d'air le long de sa surface en influant sur les phénomènes tourbillonnaires qui se forment à l'arrière du carénage. En effet, des tourbillons se forment à l'arrière du carénage en étant source de traînée et en provoquant des excitations structurelles des parois extérieures du giravion et de la poutre de queue s'étendant à l'arrière du giravion.

Une solution courante consiste à conformer en goutte d'eau le profil du carénage considéré dans un plan horizontal du giravion. On pourra à ce propos se reporter par exemple aux documents US 2011/036954 (PIASECKI FREDERICK W.), US 3 331 444 (TONER CHARLES V.), US 2012/104157 (VAN DER WESTHUIZEN), DE 11 14 394 (UNITED AIRCRAFT CORP.) et US 2006/269411 (BERTOLOTTI FABIO P).

Il est cependant apparu qu'une telle solution n'était pas pleinement satisfaisante pour optimiser la stabilisation du giravion en cas de vent latéral, de vol latéral et/ou en cas de dérapage du giravion en lacet, notamment en ce qui concerne les giravions légers pour lesquels il est recherché de favoriser leur manoeuvrabilité en vol.

Plus particulièrement parmi les contraintes relatives à l'agencement du carénage, la qualité de vol du giravion doit être préservée. Il est notamment à éviter que l'écoulement d'air le long du carénage provoque des instabilités de tenue de route et/ou ne perturbe le contrôle de l'attitude en lacet du giravion. Les nuisances sonores produites par l'écoulement d'air le long des surfaces extérieures du giravion doivent également être au mieux limitées.

Il apparait que lorsque les flux d'air entourant le giravion comportent une composante vectorielle latérale significative, la régularité de l'écoulement des dits tourbillons vers l'arrière du carénage est perturbée et par suite la stabilité de l'attitude du giravion en lacet en est affectée.

Plus particulièrement, les tourbillons générés à l'extrémité arrière du carénage tendent à se déplacer le long de la poutre de queue avec une fréquence et un sens d'écoulement aléatoires.

Une telle instabilité d'écoulement des tourbillons, favorisée en cas de vent latéral, de vol latéral et/ou en cas de dérapage du giravion en lacet, a pour effet de produire des vibrations inopportunes vis-à-vis de la résistance mécanique du giravion et vis-à-vis du confort des passagers. De surcroît, une telle situation entraîne également un accroissement des nuisances sonores et tend à déstabiliser le comportement en lacet du giravion.

Pour pallier ces inconvénients, il est connu de tronquer transversalement le profil en goutte d'eau du carénage à son extrémité arrière. Ces dispositions sont telles qu'en cas de vent latéral, de vol latéral et/ou en cas de dérapage en lacet, la régularité de l'écoulement des tourbillons en est améliorée. Cependant, un tel aménagement du bord de fuite du carénage tend à augmenter sa traînée aérodynamique, ce qui n'est pas souhaitable.

Il apparaît finalement que divers aménagements spécifiques de la conformation du carénage visant à améliorer l'écoulement de l'air pour certains cas de vol sont inadaptés pour d'autres cas de vol. Il en ressort que des compromis doivent être trouvé entre divers aménagements du carénage pour procurer au mieux un écoulement d'air satisfaisant quel que soit les cas de vol du giravion.

Par ailleurs il est connu d'agencer en un plan incliné, par rapport au plan horizontal du giravion, la paroi arrière du carénage formé par la troncature de son profil en goutte d'eau. De telles dispositions visent à favoriser un guidage de l'écoulement d'air le long du carénage vers le bas du giravion, rappelant que la rotation du rotor principal est génératrice en elle-même d'un puissant flux d'air orienté vers le bas du giravion et de phénomènes aérodynamiques complexes perturbant la stabilité du comportement du giravion en vol.

En conséquence, il est souhaitable que l'agencement global et les aménagements spécifiques du carénage vis-à-vis de l'écoulement d'air le long de ses surfaces prennent aussi en compte le souffle généré par le rotor principal.

Aussi mineurs soient-ils, les divers aménagements du carénage visant à influencer l'écoulement d'air le long de ses surfaces et par suite le long des organes disposés à l'arrière du giravion, interfèrent en combinaison entre eux sur les conditions globales d'un tel écoulement et de ses effets.

En conséquence, des choix doivent être faits en ce qui concerne l'exploitation isolée et/ou conjointe des divers aménagements du carénage pour procurer un écoulement d'air vers l'arrière du giravion jugé au mieux satisfaisant.

En outre, il est souhaitable que l'agencement du carénage soit exploitable sans modification majeure quelle que soit la configuration générale du giravion, afin d'éviter d'élaborer une conformation spécifique du carénage selon la structure générale du giravion qui varie entre diverses familles de giravions.

Il en ressort une recherche constante d'une conformation du carénage favorisant un écoulement d'air le long de sa surface extérieure procurant des résultats au mieux satisfaisants vis-à-vis des diverses contraintes et exigences précédemment mentionnées. Ainsi, des choix d'aménagements aérodynamiques spécifiques des surfaces extérieures du carénage doivent être faits isolément tout en tenant compte des effets produits lorsqu'ils sont combinés entre eux.

La présente invention s'inscrit dans le cadre d'une telle recherche et vise à proposer un giravion comportant un carénage du type susvisé ménagé au sommet du giravion, dont l'agencement global et les aménagements aérodynamiques spécifiques qu'il comporte procurent un écoulement d'air vers l'arrière du giravion répondant de manière satisfaisante aux divers problèmes posés précédemment mentionnés.

Le giravion de la présente invention est muni à son sommet d'un carénage longitudinalement étendu suivant l'orientation longitudinale du giravion. Ledit carénage enveloppe un mécanisme de manoeuvre par un pilote du giravion des pales d'un rotor principal à axe sensiblement vertical. Un tel carénage est classiquement ménagé en contrebas de la voilure du rotor principal et en rehausse d'un capot enveloppant un groupe de motorisation du giravion.

Le carénage équipant le giravion de la présente invention est plus spécifiquement choisi comportant, considéré dans un plan horizontal du giravion, un profil aérodynamique conformé en goutte d'eau dont l'extrémité arrière est transversalement tronquée.

Selon la présente invention, un tel carénage équipant le giravion est principalement reconnaissable en ce que la troncature ménagée à l'arrière du profil en goutte d'eau du carénage comporte un bossage disposé en zone transversalement médiane de la troncature.

Un tel choix d'organisation globale du carénage permet non seulement de réduire sa trainée aérodynamique et de limiter son sillage mais aussi permet de tendre à l'obtention d'un déplacement régulier et stable des tourbillons générés à l'extrémité arrière du carénage, et cela y compris lorsque les flux d'air entourant le giravion comportent une composante vectorielle latérale significative.

La traînée aérodynamique du carénage est limitée par réduction de la taille du décollement moyen du flux d'air s'écoulant le long du carénage. L'extension de la zone tourbillonnaire à l'arrière du carénage est réduite et la fréquence d'écoulement des tourbillons à l'arrière du capot est augmentée avec pour effet de favoriser leur dissipation.

Selon une forme avantageuse de réalisation, au moins ledit bossage comporte en outre des reliefs en saillie transversalement étendus, tels qu'agencés en vagues transversales ménagées successivement le long du bossage. De tels reliefs permettent de perturber le flux d'air tourbillonnaire générant lesdits tourbillons à l'arrière du carénage, pour finalement favoriser encore la dissipation des tourbillons générés. La traînée aérodynamique du carénage en est limitée.

Les reliefs en saillie sont de préférence régulièrement répartis le long du bossage. Cependant, la densité localisée des reliefs en saillie sur le bossage peut être variable selon l'agencement global du carénage et les effets recherchés sur la perturbation dudit flux d'air tourbillonnaire.

A titre indicatif, les reliefs en saillie sont potentiellement en nombre compris entre 5 et 15 en étant de préférence ménagés avec un pas de séparation entre deux reliefs en saillie voisins compris entre 0,01 et 3 fois la dimension transversale du carénage considérée dans la zone de troncature de son profil en goutte d'eau.

Selon une forme de réalisation, des résultats performants sont constatés lorsque la dimension transversale du bossage est comprise entre 0,2 et 0,4 fois la dimension transversale de la troncature. En outre, il est apparu qu'une hauteur du bossage comprise entre 0,05 et 0,25 fois la dimension d'extension longitudinale du carénage donne des résultats satisfaisants.

Selon un choix de réalisation, les zones de raccord du bossage aux bords latéraux de la troncature sont conformées en arcs concaves ménageant des arêtes vives aux bords latéraux de la troncature.

Selon un autre choix de réalisation, les zones de raccord du bossage aux bords latéraux de la troncature sont chacune à double inflexion, lesdites zones de raccord étant chacune successivement conformées en arc concave et en arc convexe ménageant des arrêtes arrondies aux bords latéraux de la troncature.

Plus particulièrement, les zones de raccords du bossage aux bords latéraux de la troncature s'étendent de préférence chacune dans leur majeure partie, considérée entre les arcs concaves et les bords latéraux de la troncature, le long d'un arc convexe défini par un cercle centré sur l'axe transversalement médian de la troncature.

Ledit cercle est préférentiellement choisi d'un diamètre légèrement supérieur à la dimension transversale de la troncature.

Selon une forme préférée de réalisation, la paroi arrière du carénage, formée par ladite troncature du profil en goutte d'eau du carénage, est agencée en un plan incliné ménageant le bord de fuite du carénage.

Ledit plan incliné est avantageusement effilé vers la base de la troncature pour drainer vers le bossage le flux d'air s'écoulant le long du capot. Par ailleurs, la dimension transversale maximale de la troncature est préférentiellement choisie comprise entre 0,6 et 0,95 fois la dimension transversale maximale du carénage.

Selon une forme préférée de réalisation, les reliefs en saillie que comporte le bossage se prolongent au moins le long des zones de la troncature bordant latéralement le bossage, puis de préférence le long des parois latérales du carénage.

Selon une forme particulière de réalisation favorisant le guidage recherché du flux d'air le long des surfaces du carénage, la dimension des reliefs en saillie s'épuise progressivement suivant leur extension en saillie le long des zones de la troncature bordant latéralement le bossage. Puis la dimension des reliefs en saillie suivant leur extension en saillie augmente progressivement vers les parois latérales du carénage le long desquelles les reliefs en saillie s'étendent jusqu'à ce que leur dimension suivant leur extension en saillie s'épuise progressivement vers l'avant du carénage.Des exemples de réalisation de la présente invention vont être décrits en relation avec les figures des planches annexées, dans lesquelles :
- la fig.1 est une illustration en vue de côté de la silhouette d'un giravion muni à son sommet d'un carénage conformément à la présente invention.
- la fig.2 est une illustration de dessus d'un carénage équipant un giravion tel que le giravion représenté sur la fig.1.
- la fig.3 est une illustration en vue arrière du carénage représenté sur la fig.2.
- la fig.4 est une illustration de côté du carénage représenté sur les fig.2 et fig.3.
- les fig.5 et fig.6 sont des illustrations schématiques en vue de dessus de carénages conformes à la présente invention, illustrant respectivement diverses variantes relatives aux modalités de raccordement entre un bossage et les bords latéraux de la paroi arrière que comporte le carénage.
- les fig.7 et fig.8 sont des illustrations d'une autre forme de réalisation d'un carénage conforme à la présente invention, respectivement en en perspective arrière pour la fig.7 et en perspective latérale arrière pour la fig.8.

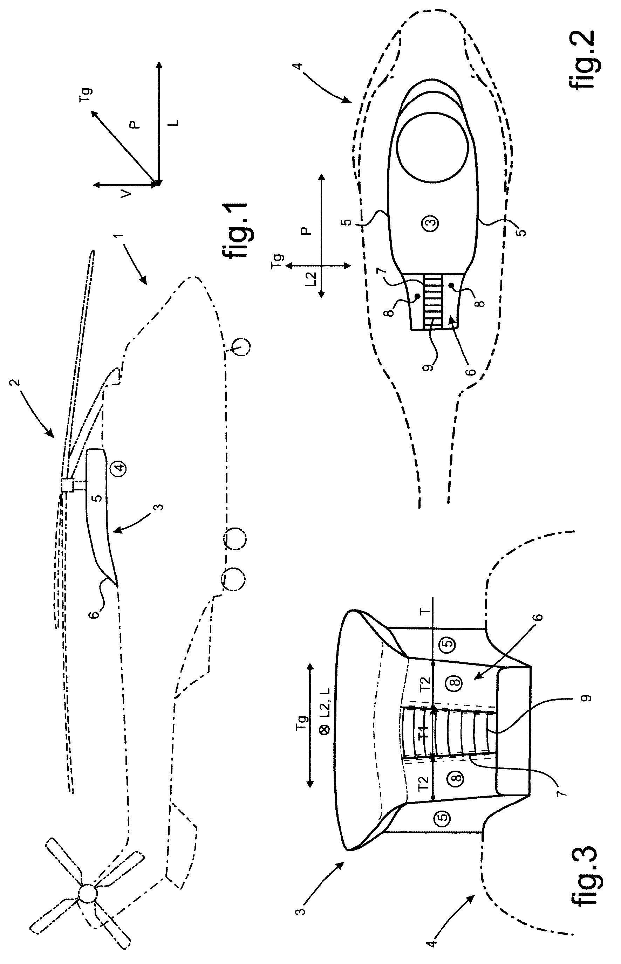

Sur la fig.1, un giravion 1 est classiquement équipé d'un rotor principal 2 à axe sensiblement vertical procurant au moins la sustentation du giravion 1, voire aussi sa propulsion et/ou son guidage suivant de quelconques axes de progression. Le giravion 1 est aussi équipé en partie haute au regard de son orientation verticale V d'extension générale, d'un groupe de motorisation exploité au moins pour l'entraînement en rotation du rotor principal 2.

Un carénage 3 de protection d'un mécanisme de manoeuvre des pales de la voilure du rotor principal 2 est classiquement ménagé en rehausse d'un capot 4 de protection du groupe de motorisation.

Ledit carénage 3 est disposé en contrebas de la voilure du rotor principal 2 en s'étendant longitudinalement suivant l'orientation longitudinale L1 d'extension du giravion 1, classiquement considérée entre l'avant et l'arrière du giravion 1 au sol.

Le profil aérodynamique du carénage 3 considéré dans un plan horizontal P d'extension du giravion 1 est agencé en goutte d'eau tronquée à son extrémité arrière orienté vers l'arrière du giravion 1. Il en ressort que la paroi arrière du carénage 3 est formée par la troncature 6 ménagée à l'arrière du profil en goutte d'eau du carénage 3, ladite troncature 6 s'étendant transversalement suivant l'orientation transversale Tg du giravion 1. Sur l'exemple de réalisation illustré, ladite troncature 6 est agencée en un plan incliné dans un dit plan horizontal P d'extension du giravion 1.

Sur les fig.2 à fig.8, la troncature 6 du carénage 3 est munie d'un bossage 7 transversalement médian s'étendant suivant l'orientation de l'extension longitudinale L2 du carénage 3. Plus particulièrement sur la fig.3, la dimension transversale T1 du bossage 7 est sensiblement équivalente aux dimensions transversales T2 des zones 8 de la troncature 6 bordant le bossage 7.

Dans le cas choisi tel qu'illustré où la troncature 6 est effilée vers sa base, le bossage 7 est effilé suivant l'effilement de la troncature 6. Dans ces conditions, il est bien évident que les dimensions transversales T1, T2 relatives entre le bossage 7 et les zones 8 de la troncature 6 qui le bordent doivent être considérées localement l'une par rapport à l'autre. Plus particulièrement pour une dimension transversale T donnée de la troncature 6, la dimension transversale T1 du bossage 7 et la dimension transversale T2 individuelle des zones 8 de la troncature 6 qui le bordent sont sensiblement équivalentes et correspondent chacune sensiblement au tiers de la dimension transversale T de la troncature 6.

Par ailleurs sur les fig.2 à fig.8, au moins le bossage 7 est muni de reliefs en saillie 9 s'étendant suivant l'orientation d'extension transversale Tg du carénage 3 correspondante à l'orientation d'extension transversale du giravion.

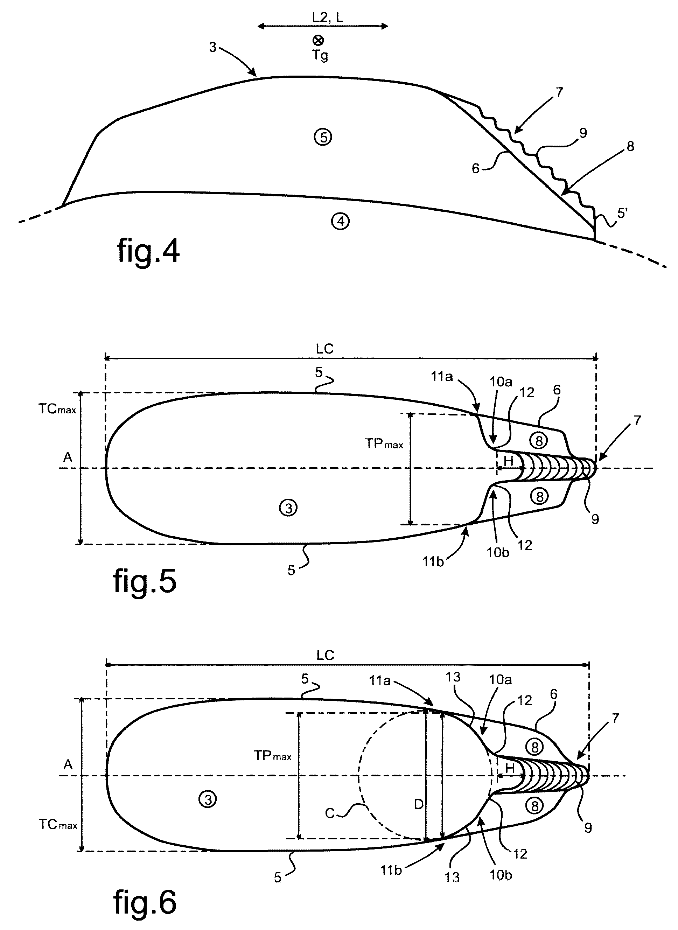

De tels reliefs en saillie 9 ménagent des perturbations de la surface extérieure du bossage 7, en étant notamment agencés en vagues longitudinalement successives, tel que particulièrement visibles sur la fig.4.

On notera que selon les effets spécifiquement procurés par les reliefs en saillie 9, la conformation en vagues du profil des reliefs en saillie 9 peut être adaptée en des conformations analogues à lignes plus ou moins brisées.

Sur l'exemple de réalisation illustré, les reliefs en saillie 9 sont en nombre compris entre huit et dix en étant régulièrement répartis le long du bossage 7 et en étant de profondeurs respectives équivalentes.

Cependant, le nombre, la densité, la régularité de la forme du profil, la régularité de la succession et/ou la taille des reliefs en saillie 9 peuvent être variables selon les résultats spécifiquement obtenus pour des carénages dont les dimensions varient considérablement de l'un à l'autre.

Sur les fig.5 et fig.6, la dimension transversale maximale TPₘₐₓ de la troncature 6 est comprise entre 0,6 et 0,95 fois la dimension transversale maximale TCₘₐₓ du carénage 3.

En outre, la hauteur H du bossage 7 est sensiblement comprise entre 0,05 et 0,25 fois la dimension d'extension longitudinale LC du carénage 3.

Par ailleurs les zones de raccord 10a,10b du bossage 7 aux bords latéraux 11a,11b de la troncature 6 sont potentiellement diversement agencées selon l'optimisation des résultats obtenus vis-à-vis de la conformation et/ou des dimensions globales du carénage 3.

Par exemple sur la fig.5, lesdites zones de raccord 10a,10b sont chacune conformées en arc concave 12 ménageant des arêtes sensiblement vives aux bords latéraux 11a,11b de la troncature 6, de sorte que la rupture de forme de l'extrémité arrière du carénage 3 ménagée par la troncature est optimisée.

Par exemple encore sur la fig.6, lesdites zones de raccord 10a,10b sont chacune à double inflexion en étant chacune conformées successivement en arc concave 12 et en arc convexe 13, de sorte que les arrêtes des bords latéraux 11a,11b de la troncature 6 sont significativement arrondies. Ces dispositions sont telles que la rupture de forme de l'extrémité arrière du carénage 3 ménagée par la troncature 6 est adoucie.

Plus particulièrement, une majeure partie de chacune desdites zones de raccord 10a,10b s'étend entre l'arc concave 12 et le bord latéral 11a,11b de la troncature 6 le long d'un arc convexe 13. Ledit arc convexe 13 est défini par un cercle C centré, comme le bossage 7, suivant l'axe A transversalement médian de la troncature 6. Le diamètre D dudit cercle C est légèrement supérieur à la dimension transversale T de la troncature 6.

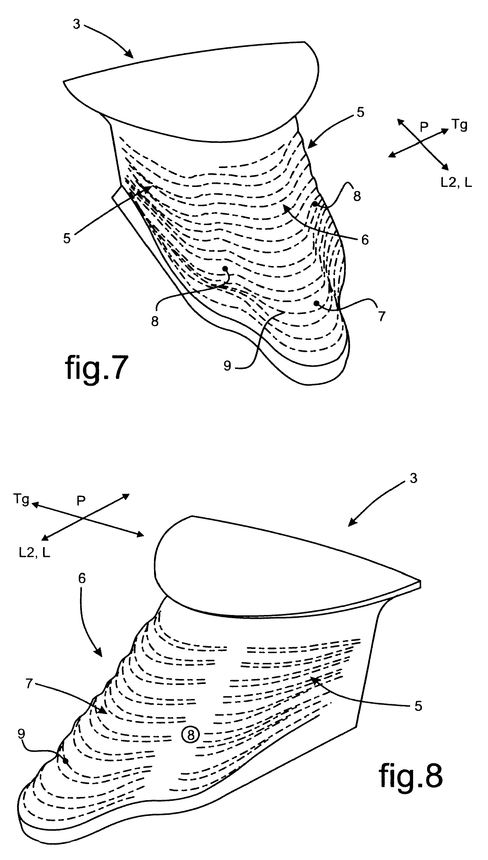

Sur les fig.7 et fig.8, les reliefs en saillie 9 que comporte le bossage 7 se prolongent le long des zones 8 de la troncature 9 bordant latéralement le bossage 7, puis le long des parois latérales 5 du carénage 3. La dimension des reliefs en saillie 9 s'épuise progressivement suivant leur extension en saillie le long des zones de la troncature 9 bordant latéralement le bossage 7. Puis la dimension des reliefs en saillie 9 suivant leur extension en saillie augmente progressivement vers les parois latérales 5 du carénage 3 le long desquelles les reliefs en saillie 9 s'étendent jusqu'à ce que leur dimension suivant leur extension en saillie s'épuise progressivement vers l'avant du carénage 3.

## Revendications

1. Giravion (1) muni à son sommet d'un carénage (3) longitudinalement étendu suivant l'orientation longitudinale (L) du giravion (1), ledit carénage (3) enveloppant un mécanisme de manoeuvre par un pilote du giravion (1) des pales d'un rotor principal (2) à axe sensiblement vertical en étant ménagé en contrebas de la voilure du rotor principal (2) et en rehausse d'un capot (4) enveloppant un groupe de motorisation du giravion (1), le profil du carénage (3) considéré dans un plan horizontal (P) du giravion (1) étant conformé en goutte d'eau dont l'extrémité arrière est transversalement tronquée (6),
**caractérisé en ce que** la troncature (6) ménagée à l'arrière dudit profil en goutte d'eau du carénage (3) comporte un bossage (7) disposé en zone transversalement médiane de la troncature (6).

2. Giravion selon la revendication 1,
**caractérisé en ce qu'**au moins ledit bossage (7) comporte des reliefs en saillie (9) transversalement étendus agencés en vagues transversales ménagées successivement le long du bossage (7).

3. Giravion selon la revendication 2,
**caractérisé en ce que** les reliefs en saillie (9) sont régulièrement répartis le long du bossage (7).

4. Giravion selon l'une quelconque des revendications 2 et 3,
**caractérisé en ce que** les reliefs en saillie (9) sont ménagés avec un pas de séparation entre deux reliefs en saillie (9) voisins compris entre 0,01 et 3 fois la dimension transversale (T) du carénage (3) considérée dans la zone de troncature (5') de son profil en goutte d'eau.

5. Giravion selon l'une quelconque des revendications 1 à 4,
**caractérisé en ce que** la dimension transversale (T1) du bossage (7) est comprise entre 0,2 et 0,4 fois la dimension transversale (T) de la troncature (6).

6. Giravion selon l'une quelconque des revendications 1 à 5,
**caractérisé en ce que** la hauteur (H) du bossage (7) est comprise entre 0,05 et 0,25 fois la dimension d'extension longitudinale (LC) du carénage (3).

7. Giravion selon l'une quelconque des revendications 1 à 6,
**caractérisé en ce que** les zones de raccord (10a,10b) du bossage (7) aux bords latéraux (11 a, 11 b) de la troncature (6) sont conformées en arcs concaves (12) ménageant des arêtes vives aux bords latéraux (11a,11b) de la troncature (6).

8. Giravion selon l'une quelconque des revendications 1 à 6,
**caractérisé en ce que** les zones de raccord (10a,10b) du bossage (7) aux bords latéraux (11a,11b) de la troncature (6) sont chacune à double inflexion en étant chacune successivement conformées en arc concave (12) et en arc convexe (13) ménageant des arrêtes arrondies aux bords latéraux (11a,11b) de la troncature (6).

9. Giravion selon la revendication 8,
**caractérisé en ce que** les zones de raccords (10a,10b) du bossage (7) aux bords latéraux (11a,11b) de la troncature (6) s'étendent chacune dans leur majeure partie, considérée entre les arcs concaves (12) et les bord latéraux (11a,11b) de la troncature (6), le long d'un arc convexe (13) défini par un cercle (C) centré sur l'axe (A) transversalement médian de la troncature (6), ledit cercle (C) étant d'un diamètre (D) légèrement supérieur à la dimension transversale (T) de la troncature (6).

10. Giravion selon l'une quelconque des revendications 1 à 9,
**caractérisé en ce que** la paroi arrière du carénage (3) formée par la troncature (6) du profil en goutte d'eau du carénage (3), est agencée en un plan incliné (6) ménageant le bord de fuite du carénage (3).

11. Giravion selon la revendication 10,
**caractérisé en ce que** ledit plan incliné est effilé vers la base de la troncature (6), la dimension transversale maximale (TPₘₐₓ) de la troncature (6) étant comprise entre 0,6 et 0,95 fois la dimension transversale maximale (TCₘₐₓ) du carénage (3).

12. Giravion selon l'une quelconque des revendications 2 à 11,
**caractérisé en ce que** les reliefs en saillie (9) que comporte le bossage (7) se prolongent le long des zones (8) de la troncature (6) bordant latéralement le bossage (7) puis le long des parois latérales (5) du carénage (3).

## Patentansprüche

1. Drehflügelflugzeug (1) mit einer oberen Verkleidung (3), die sich longitudinal in Längsrichtung (L) des Drehflügelflugzeugs (1) erstreckt, wobei die Verkleidung (3) einen Mechanismus zur Betätigung von Rotorblättern eines Hauptrotors (1) mit im Wesentlichen vertikaler Achse durch einen Piloten des Drehflügelflugzeugs (1) umhüllt, indem sie unterhalb der Drehflügel des Hauptrotors (2) und oberhalb einer Haube (4), die die Antriebsgruppe des Drehflügelflugzeugs (1) umhüllt, angeordnet ist, wobei das Profil der Verkleidung (3) in einer horizontalen Ebene (P) des Drehflügelflugzeugs (1) betrachtet einem Wassertropfen entspricht, dessen hinteres Ende (6) quer abgeschnitten ist,
**dadurch gekennzeichnet, dass** die Abstumpfung (6), die am hinteren Ende des Wassertropfenprofils der Verkleidung (3) angeordnet ist, eine Erhebung (7) aufweist, die in Querrichtung gesehen im mittleren Bereich der Abstumpfung (6) angeordnet ist.

2. Drehflügelflugzeug nach Anspruch 1,
**dadurch gekennzeichnet, dass** mindestens die Erhebung (7) vorstehende Profile (9) aufweist, die sich in Querrichtung erstrecken und in Form von Querrillen angeordnet sind, die aufeinanderfolgend entlang der Erhebung (7) vorgesehen sind.

3. Drehflügelflugzeug nach Anspruch 2,
**dadurch gekennzeichnet, dass** die vorstehenden Reliefs (9) gleichmäßig entlang der Erhebung (7) verteilt angeordnet sind.

4. Drehflügelflugzeug nach einem der Ansprüche 2 und 3,
**dadurch gekennzeichnet, dass** die vorstehenden Reliefs (9) mit einem Abstand zwischen zwei benachbarten vorstehenden Reliefs (9) vorgesehen sind, der zwischen dem 0,01- bis 3-fachen der Querabmessung (T) der Verkleidung (3), betrachtet in dem Abstumpfungsbereich (5') ihres Wassertropfenprofils, liegt.

5. Drehflügelflugzeug nach einem der Ansprüche 1 bis 4,
**dadurch gekennzeichnet, dass** die Querabmessung (T1) der Erhebung (7) zwischen dem 0,2- bis 0,4-fachen der Querabmessung (T) der Abstumpfung (6) liegt.

6. Drehflügelflugzeug nach einem der Ansprüche 1 bis 5,
**dadurch gekennzeichnet, dass** die Höhe (H) der Erhebung (7) zwischen dem 0,05- bis 0,25-fachen der Längserstreckungsabmessung (LC) der Verkleidung (3) liegt.

7. Drehflügelflugzeug nach einem der Ansprüche 1 bis 6,
**dadurch gekennzeichnet, dass** die Verbindungsbereiche (10a, 10b) der Erhebung (7) an den Seitenrändern (11a, 11b) der Abstumpfung (6) an konkave Kreisbögen (12) angepasst sind, die scharfe Kanten an den Seitenrändern (11a, 11b) der Abstumpfung (6) bilden.

8. Drehflügelflugzeug nach einem der Ansprüche 1 bis 6,
**dadurch gekennzeichnet, dass** die Verbindungsbereiche (10a, 10b) der Erhebung (7) an den Seitenrändern (11a,11b) der Abstumpfung (6) jeweils eine doppelte Krümmung aufweisen, die jeweils aufeinanderfolgend an einen konkaven Bogen (12) und einen konvexen Bogen (13) angepasst ist, die an den Seitenrändern (11a, 11b) der Abstumpfung (6) abgerundete Rippen bilden.

9. Drehflügelflugzeug nach Anspruch 8,
**dadurch gekennzeichnet, dass** die Verbindungsbereiche (10a, 10b) der Erhebung (7) an den Seitenrändern (11a, 11b) der Abstumpfung (6) sich jeweils zu ihrem größten Teil, betrachtet zwischen den konkaven Bögen (12) und den Seitenrändern (11a, 11b) der Abstumpfung (6), entlang eines konvexen Bogens (13) erstrecken, der definiert ist durch einen Kreis (C), der auf der in Querrichtung mittleren Achse (A) der Abstumpfung (6) zentriert ist, wobei der Kreis (C) einen Durchmesser (D) aufweist, der etwas größer als die Querabmessung (T) der Abstumpfung (6) ist.

10. Drehflügelflugzeug nach einem der Ansprüche 1 bis 9,
**dadurch gekennzeichnet, dass** die hintere Wand der Verkleidung (3), die durch die Abstumpfung (6) des Wassertropfenprofils der Verkleidung (3) gebildet wird, in einer geneigten Ebene (6) angeordnet ist, die die Abrisskante der Verkleidung (6) bildet.

11. Drehflügelflugzeug nach Anspruch 10,
**dadurch gekennzeichnet, dass** die geneigte Ebene zum Boden der Abstumpfung (6) hin spitz zuläuft, wobei die maximale Querabmessung (TPₘₐₓ) der Abstumpfung (6) zwischen dem 0,6- bis 0,95-fachen der maximalen Querabmessung (TCₘₐₓ) der Verkleidung (3) liegt.

12. Drehflügelflugzeug nach einem der Ansprüche 2 bis 11,
**dadurch gekennzeichnet, dass** die vorstehenden Reliefs (9), die die Erhebung (7) aufweist, sich entlang Bereichen (8) der Abstumpfung (6) erstrecken, die die Erhebung (7) seitlich einfassen, bis entlang seitlicher Wandungen (5) der Verkleidung (3).

## Claims

1. A rotorcraft (1) provided on top with a fairing (3) extending longitudinally along the longitudinal orientation (L) of the rotorcraft (1), said fairing (3) covering a mechanism enabling a pilot of the rotorcraft (1) to manoeuvre the blades of a main rotor (2) having a substantially vertical axis, being formed beneath the rotary wing of the main rotor (2) and raised above a cowling (4) covering a power plant of the rotorcraft (1), the profile of the fairing (3), considered in a horizontal plane (P) of the rotorcraft (1), being in a drop-of-water shape, the rear end of which is transversely truncated (6),
**characterised in that** the truncated portion (6) formed at the rear of said drop-of-water profile of the fairing (3) comprises a hump (7) arranged in the transversely median zone of the truncated portion (6).

2. A rotorcraft according to Claim 1,
**characterised in that** at least said hump (7) comprises protruding reliefs (9) extending transversely and arranged in transverse waves formed in succession along the hump (7).

3. A rotorcraft according to Claim 2,
**characterised in that** the protruding reliefs (9) are distributed regularly along the hump (7).

4. A rotorcraft according to any one of Claims 2 and 3,
**characterised in that** the protruding reliefs (9) are formed with a pitch between two adjacent protruding reliefs (9) of between 0.01 and 3 times the transverse dimension (T) of the fairing (3) considered in the zone of the truncated portion (5') of its drop-of-water-shaped profile.

5. A rotorcraft according to any one of Claims 1 to 4,
**characterised in that** the transverse dimension (T1) of the hump (7) is between 0.2 and 0.4 times the transverse dimension (T) of the truncated portion (6).

6. A rotorcraft according to any one of Claims 1 to 5,
**characterised in that** the height (H) of the hump (7) is between 0.05 and 0.25 times the dimension of longitudinal extension (LC) of the fairing (3).

7. A rotorcraft according to any one of Claims 1 to 6,
**characterised in that** the zones (10a, 10b) connecting the hump (7) to the lateral edges (11a, 11b) of the truncated portion (6) are shaped as concave arcs (12) forming sharp edges on the lateral edges (11a, 11b) of the truncated portion (6).

8. A rotorcraft according to any one of Claims 1 to 6,
**characterised in that** the zones (10a, 10b) connecting the hump (7) to the lateral edges (11a, 11b) of the truncated portion (6) are each doubly inflected, each being successively shaped as a concave arc (12) and a convex arc (13) forming rounded edges on the lateral edges (11a, 11b) of the truncated portion (6).

9. A rotorcraft according to Claim 8,
**characterised in that** the zones (10a, 10b) connecting the hump (7) to the lateral edges (11a, 11b) of the truncated portion (6) each extend in their major part, considered between the concave arcs (12) and the lateral edges (11a, 11b) of the truncated portion (6), along a convex arc (13) defined by a circle (C) centred on the transversely median axis (A) of the truncated portion (6), said circle (C) being of a diameter (D) slightly greater than the transverse dimension (T) of the truncated portion (6).

10. A rotorcraft according to any one of Claims 1 to 9,
**characterised in that** the rear wall of the fairing (3) formed by the truncated portion (6) of the drop-of-water-shaped profile of the fairing (3) is arranged in an inclined plane (6) forming the trailing edge of the fairing (3).

11. A rotorcraft according to Claim 10,
**characterised in that** said inclined plane is tapered towards the base of the truncated portion (6), the maximum transverse dimension (TPₘₐₓ) of the truncated portion (6) being between 0.6 and 0.95 times the maximum transverse dimension (TCₘₐₓ) of the fairing (3).

12. A rotorcraft according to any one of Claims 2 to 11,
**characterised in that** the protruding reliefs (9) of the hump (7) extend along the zones (8) of the truncated portion (6) laterally bordering the hump (7), then along the lateral walls (5) of the fairing (3).
